# EUROPEAN PATENT SPECIFICATION

(11) **EP 4 690 766 B1**
(45) Date of publication and mention of the grant of the patent: **30.09.2026**
(21) Application number: 24816777.7
(22) Date of filing: 25.11.2024
(51) Int. Cl.: H04M 3/436, H04M 3/42

(54) **METHOD, DEVICE AND SOFTWARE FOR BLOCKING OF INTERNATIONAL CALLS**
VERFAHREN, VORRICHTUNG UND SOFTWARE ZUR SPERRUNG INTERNATIONALER ANRUFE
PROCÉDÉ, DISPOSITIF ET LOGICIEL DE BLOCAGE D'APPELS INTERNATIONAUX

(30) Priority: 22.12.2023 FI 20236424
(43) Date of publication of application: 11.02.2026
(73) Proprietor: Elisa Oyj, 00520 Helsinki (FI)
(72) Inventor: JUNNINEN, Timo, 00520 Helsinki (FI); JÄKKÖ, Karri, 00520 Helsinki (FI); HALME, Marko, 00520 Helsinki (FI)
(74) Representative: Laine IP Oy
(86) International application number: PCT/FI2024/050635
(87) International publication number: WO 2025/133445

(56) References cited:
- US-A1- 2009 059 818
- US-B1- 6 961 334
- EGYPT: "Spoofing using national number", no. Virtual; 20211108 - 20211119, 1 December 2021 (2021-12-01), XP052086068, Retrieved from the Internet <URL:https://ftp.3gpp.org/tsg_ran/TSG_RAN/TSGR_94e/Docs/RP-213477.zip SG2-LS222-TD1512-Att1.zip SG2-LS222-TD1512-Att1.docx> [retrieved on 20211201]

## Description

### TECHNICAL FIELD

Various example embodiments relate to mobile communications.

### BACKGROUND

Multiple different call restriction services are currently available in telecommunications networks for different use cases. Theses service include, for example, services for barring outgoing call (e.g., for cost containment purposes), services where a blacklist stored in a memory of a mobile phone is used for blocking certain user-defined phone numbers (e.g., phone numbers of malicious or otherwise unwanted callers) and services, provided by a developer of an operating system of a mobile phone or a phone manufacturer, enabling blacklisting of phone numbers which have been reported as spam by enough users. However, the applied restrictions for incoming calls in these cases are based on the phone number of the calling party received, at the mobile phone, during incoming call signaling.

As the problem of fraudulent caller numbers has grown worldwide, more sophisticated mechanisms are needed to provide additional security. This problem concerns especially incoming international calls (i.e., calls originating from a country different from a country of the called party) as most fraudulent calls are international. Also, there are already significant mechanisms in place for dealing with fraudulent calls from domestic phone numbers. For example, calling-number verification may be performed based on known subscribers of national mobile operators in such a case.

EGYPT: "Spoofing using national number", 3GPP DRAFT; RP-213477.ZIP SG2-LS222-TD1512-ATT1, 3RD GENERATION PARTNERSHIP PROJECT (3GPP), MOBILE COMPETENCE CENTRE; 650, ROUTE DES LUCIOLES ; F-06921 SOPHIA-ANTIPOLIS CEDEX; FRANCE, no. Virtual; 20211108 - 20211119, 1 December 2021 (2021-12-01), XP052086068 is a standard contribution paper discussing the issue of call spoofing and related frauds using national numbers, such as PRS and Wangiri scams, and proposes a technical solution based on implementing firewalls at international gateways to block calls that falsely appear as local numbers, except for genuine roaming subscribers.

### SUMMARY

According to some aspects, there is provided the subject-matter of the independent claims. Some embodiments are defined in the dependent claims. The scope of protection sought for various embodiments of the invention is set out by the independent claims. The embodiments, examples and features, if any, described in this specification that do not fall under the scope of the independent claims are to be interpreted as examples useful for understanding various embodiments of the invention.

### BRIEF DESCRIPTION OF THE DRAWINGS

Figure 1 illustrates an exemplary system according to embodiments;
Figures 2 and 3 illustrate processes according to embodiments; and
Figure 4 illustrates an apparatus according to embodiments.

### DETAILED DESCRIPTION OF SOME EMBODIMENTS

The following embodiments are only presented as examples. Although the specification may refer to "an", "one", or "some" embodiment(s) and/or example(s) in several locations of the text, this does not necessarily mean that each reference is made to the same embodiment(s) or example(s), or that a particular feature only applies to a single embodiment and/or example. The verbs "to comprise" and "to include" are used in this document as open limitations that neither exclude nor require the existence of also un-recited features. Single features of different embodiments and/or examples may also be combined to provide other embodiments and/or examples.

The term "terminal device" refers herein to a (typically portable) computing device comprising a subscriber identification module (SIM) and being capable of wireless communication in one or more wireless communication networks. A terminal device may be, for example, a mobile station (mobile phone), a smartphone, a laptop, a table computer, a mobile hotspot, an Internet of Things device, a smartwatch or a wearable device. The terminal device may also be called a user device, a user terminal or user equipment (UE).

The term "mobile operator" refers herein to a mobile (tele)communications company or organization that provides mobile communications services for mobile device users (i.e., to terminal devices of users). The operator provides a SIM card to the customer who inserts it into the mobile device to gain access to said services. A mobile operator may be equally called a mobile phone operator, a wireless provider or a carrier. The mobile operator(s), in embodiments, may be a mobile network operator (MNO), that is, a mobile operator which owns the underlying network and spectrum assets required to run the provided service.

The term "domestic call" refers herein to a call where the calling party and the called party are in the same country, that is, the call is made within a single country. The countries where the phone numbers of the calling party and the called party were originally assigned or registered are the same in this case. Thus, for a domestic call, the phone numbers of the calling party and the called party are associated with the same country code.

The term "international call" refers herein to any call which is not a domestic call. In other words, an international call is a call spanning or involving multiple countries. Typically, the calling party and the called party are in a different country. The countries where phone numbers of the calling party and the called party were originally assigned or registered are also typically different in the case of an international call. However, a call from a first phone number registered in a first country to a second phone number registered in the same first country may also be considered an international call if at least one of the calling and called parties is currently abroad. Thus, for an international call, the phone numbers of the calling party and the called party are typically associated with different country codes as the country code reflects the original assignment or registration of a phone number. It should be noted that an incoming call from a calling party having a phone number registered in a first country to a called party having a phone number registered in a second country may be considered an international call even when the calling party is physically located in the second country (as such a call may still be routed via the first country).

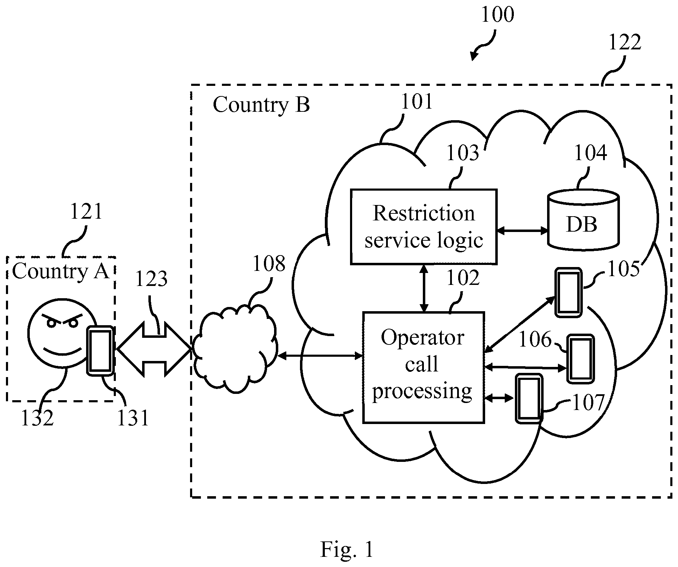

A general architecture of a system 100 according to embodiments is shown in Figure 1. Figure 1 illustrates a simplified system architecture only showing some elements and functional entities. It is apparent to a person skilled in the art that the system may also comprise other functions and structures. At least some of the elements (namely, elements 102, 103) may be logical elements which may be implemented using a variety of different physical means (e.g., using one or more network nodes and/or computing devices).

Figure 1 illustrates a system 100 for connecting or deciding not to connect an international call from a calling party who is located and whose phone number is registered in a country A to a called party who is located and whose phone number is registered in a country B. The elements 121, 122 illustrate, respectively, the countries A and B. Thus, any elements contained within the limits of elements 121, 122 are assumed to be located in the countries A and B, respectively.

The system 100 comprises a terminal device 131 of the calling party located in country A 121 and two interconnected operator networks 101, 108 provided respective two mobile operators (e.g., MNOs) in country B 122. The operator network 101 further comprises an operator call processing entity 102, a restriction service logic 103, a database (DB) 104 and a plurality of terminal devices 105 to 107 (corresponding to mobile subscribers of the mobile operator of the operator network 101). In the following, these elements are discussed in the order that they appear (i.e., perform actions) in an international call routing process.

The calling party 132 initiating the international call is located in country A 121. The phone number of the calling party 132 is also assumed to be registered in country A. In some use cases, the calling party 132 may be assumed to be a potentially unwanted caller, at least from the perspective of some of the mobile subscribers of the mobile operator. The calling party 132 may be, for example, an intentionally malicious party (e.g., a human scammer or a robocaller) or a salesperson whose services are not desired. In other use cases, the calling party may be any international calling party. In such use cases, the called party may be, for example, a child, a mentally handicapped person, an older person or any other person who has little or no use for international calls and/or whose decision-making regarding how to handle such incoming international calls may be compromised.

When the calling party 132 initiates the international call using their terminal device 131, a call setup request is connected or routed from the terminal device 131 of the calling party via one or more international interconnections 123 (that is, via one or more points of interconnection, POIs) to an operator network 108 of a mobile operator. The one or more international interconnections may comprise one or more intermediate switches, one or more international communication links and/or one or more international communication networks. Intermediate switches are network elements that facilitate the routing of calls between different local exchanges or mobile switching centers within a country or between countries. The one or more international communication links may comprise wired and/or wireless communication links (e.g., undersea cables and/or satellite communication links). The one or more international communication networks may comprise wired and/or wireless communication networks (e.g., radio networks and/or terrestrial fiber-optic networks).

The operator network 108 may be defined here simply as the operator network which first receives the call setup request of the calling party 132 in country B 122. Here, it is assumed that this first or initial operator network 108 is not the mobile operator of the called party (i.e., the called party is not a mobile subscriber of the network operator of the operator network 108). The initial operator network 108 routes the received call setup request to an operator network 101 of the called party. Specifically, the call setup request may be routed an operator call processing entity 102 of the operator network 101.

It should be noted that, in some cases, the operator network 101 of the called party may be also be the first operator network to which the call setup request is routed in country B 122. In other words, the element 108 may not be relevant in case of all incoming international calls.

The operator call processing entity 102 is configured to process incoming call setup requests and carry out a call setup with a targeted terminal device accordingly. The operator call processing entity 102 may be, for example, a server or other computing device or system. The operator call processing entity 102 may be communicatively connected to a plurality of terminal devices 105 to 107 (corresponding, respectively, to a plurality of mobile subscribers of the mobile operator of the operator network 101). The operator call processing entity 102 may be, for example, a telephone exchange or switch.

The operator call processing entity 102 may implement a mechanism for determining the origin of the incoming international call (or, more specifically, a country in which the phone number of the calling party of the incoming international call was originally assigned or registered). In fact, many countries such as Finland have implemented a legal requirement that the origin of the international call should be made available to the network operator of the B-subscription (equally called the terminating subscription or called party's subscription). Thus, the mobile operator is in a rather unique spot as it is the only actor that knows both the origin of an international call as well as services of the B-subscription (i.e., called party's subscription).

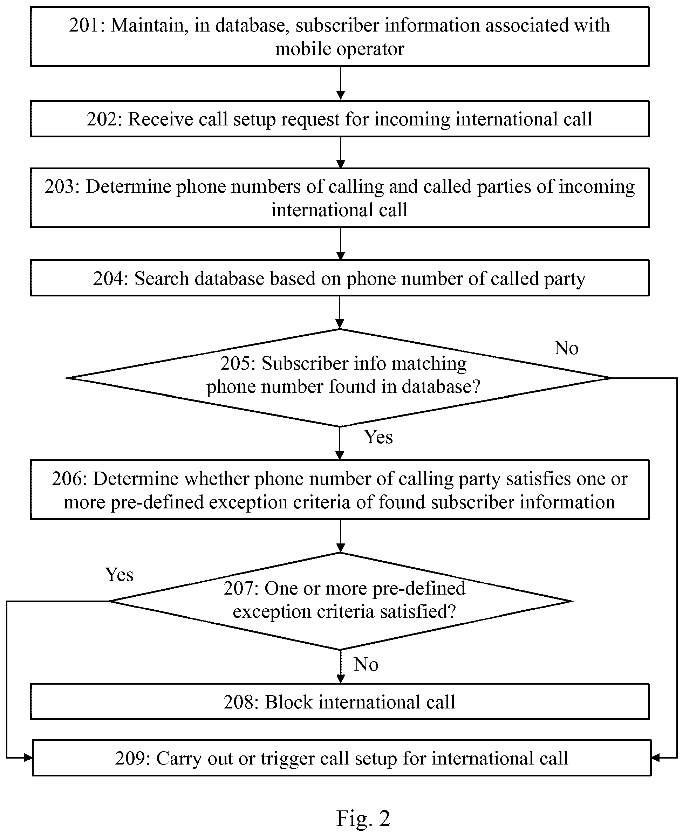

In embodiments, the operator call processing entity 102 is assumed to be connected (or to comprise) restriction service logic 103. The restriction service logic 103 is configured to implement, with a database 104, a new international call restriction service for restricting routing of international calls at least for some of the mobile subscribers of the mobile operator. The international call restriction service may be an additional service to a phone subscription of a mobile subscriber. To enable this functionality, the database 104 (equally called a subscriber database) is assumed to comprise information on a plurality of mobile subscribers of the mobile operator who are using the international call restriction service. Said plurality of mobile subscribers may form a proper subset of all subscribers of the mobile operator (that is, some mobile subscribers may not have subscribed to the international call restriction service). Said information comprises, for each of the plurality of mobile subscribers, at least information identifying the mobile subscriber (e.g., a phone number) and one or more exception criteria defining exceptions for the policy of blocking all international calls. The functionalities related to the restriction service logic 103 and the database 104 are discussed in further detail in connection with Figures 2 to 3.

As mentioned above, the operator call processing entity 102 and the restriction service logic 103 as shown in Figure 1 may be logical elements which may be implemented multiple different ways (i.e., multiple different technical means). In general, the operator call processing entity 102 and the restriction service logic 103 may be implemented using a single computing device (e.g., a server) or, respectively, using first and second computing devices. For example, the operator call processing entity 102 and/or the restriction service logic 103 may be implemented in practice using an Internet Protocol (IP) Multimedia Subsystem (IMS) application server and a separate (international call restriction) service logic implemented (or programmed) on top of an application programming interface (API). Thus, the IMS application server may be configured to implement both the operator call processing entity 102 and/or the restriction service logic 103, at least in some embodiments. To give another example, the operator call processing entity 102 may be implemented using a telephone exchange or switch while the restriction service logic 103 may be implemented using an intelligent network (IN) system communicatively connected to the telephone exchange or switch. In some embodiments, the restriction service logic 103 may form a part of the operator call processing entity 102 (being, e g., a telephone exchange or switch or a server).

Figure 2 illustrates a process according to embodiments for implementing an international call restricting service. The process of Figure 2 may be implemented using a computing device or a set of interconnected computing devices located in an operator network of a mobile operator. In other words, the process of Figure 2 may be implemented using one or more nodes of the operator network of the mobile operator. The process of Figure 2 may be carried out, for example, by a laptop or desktop computer, a server computer or a cloud computing system or platform. The apparatus may correspond to the restriction service logic 103 of Figure 1 or a combination of the operator call processing entity 102 and the restriction service logic 103 of Figure 1. In the following, the entity carrying out the process is called simply an apparatus.

Referring to Figure 2, the apparatus is initially assumed to maintain, in block 201, in a database, subscriber information associated with a mobile operator. The subscriber information comprises, for each of a plurality of mobile subscribers (of the mobile operator), at least a phone number of a mobile subscriber and one or more pre-defined exception criteria for allowing incoming international calls. It should be emphasized that the one or more pre-defined exception criteria may be defined separately for each of the plurality of mobile subscribers, as opposed to there being a single set of one or more general exception criteria applicable to all mobile subscribers. Said plurality of mobile subscribers may correspond to mobile subscribers of the mobile operator who have subscribed to an international call restriction service (i.e., who have requested selective blocking of international calls). Thus, the subscriber information may be equally called international call restriction service subscriber information. The subscriber information relating to a particular single mobile subscriber may be equally called an (international call restriction service) subscriber information entry. The database (equally called a subscriber database or an international call restriction service subscriber database) may be an internal or external database of the apparatus.

For each (or at least some) of the plurality of mobile subscribers, the phone number of the mobile subscriber maintained in the database may be a mobile station international subscriber directory number, MSISDN, of the mobile subscriber. Alternatively, for each (or at least some) of the plurality of mobile subscribers, the phone number of the mobile subscriber maintained in the database may be a phone number of the mobile subscriber in a national format of a country of the mobile operator. In this latter case, it may be assumed that all of the plurality of mobile subscribers are from the same country (that is, from the country of the mobile operator) and thus have the same country code (which is, obviously, known to the mobile operator).

The one or more pre-defined exception criteria for allowing incoming international calls may define, for example, one or more exception criteria defined in terms of MSISDNs, country codes and/or country+area codes of incoming international calls. Additionally, the one or more pre-defined exception criteria may define one or more exception criteria relating to the current time and date (defining when the international call restriction service is active or inactive). The pre-defined exception criteria are discussed in further detail in connection with blocks 206, 207.

The apparatus receives, in block 202, a call setup request for an incoming international call. The call setup request may be received via one or more international interconnections and optionally via an operator network of another mobile operator of the same country as said mobile operator (as depicted in Figure 1). In other words, the call setup request may be received via a point of interconnection (POI) between the operator network of the mobile operator and an operator network of another mobile operator of the same or different country as said mobile operator. Said operator network of another mobile operator of the same country as said mobile operator may be an operator network which first received the call request in the country of the mobile operator. If the apparatus is a separate entity from an operator call processing entity of the mobile operator, the call setup request may be received from the operator call processing entity. The call request may (explicitly) that indicate the call request to an international call (as opposed to a domestic call).

The apparatus determines, in block 203, phone numbers of a calling party and a called party of the incoming international call. It is assumed here that the called party corresponds to a mobile subscriber of the mobile operator associated with the apparatus (i.e., of the mobile operator in whose operator network the apparatus is located). The determining may be based on call signaling (i.e., on received control information associated with the call). The phone numbers may be, for example, MSISDNs or phone numbers defined in some other international format. The phone numbers of the calling party and the called party may be equally called an A-number and a B-number, respectively. The calling party may be a person or a robocaller. The called party may be a person.

The apparatus searches, in block 204, the database based on the phone number of the called party. In other words, the apparatus tries to find a subscriber information entry in the database corresponding to the phone number of the called party.

In response to failing to find, from the database, subscriber information of a mobile subscriber corresponding to the called party in block 205, the apparatus determines, in block 209, the apparatus carries out or triggers, in block 209, a call setup for the incoming international call according to the call setup request. Thus, in this case, the call setup may be executed in a conventional manner. This may correspond to a case where the mobile subscriber is a mobile subscriber of the mobile operator who has not (yet) subscribed to the international call restricting service.

In response to finding, from the database, subscriber information of a mobile subscriber corresponding to the called party in block 205, the apparatus determines, in block 206, whether the phone number of the calling party (i.e., the phone number of the mobile subscriber) satisfies the one or more pre-defined exception criteria of the found subscriber information (or the found subscriber information entry). The one or more pre-defined exception criteria may be user-definable, that is, the user (i.e., the subscriber of the international call blocking service) may have previously defined the one or more pre-defined exception criteria.

The one or more pre-defined exception criteria of block 206 may be defined in a plurality of different ways. In the simplest case, the one or more pre-defined exception criteria of block 206 comprise (or consist of), for at least one mobile subscriber of the plurality of mobile subscribers, a criterion defining that all (or none) of incoming international calls should be blocked. This criterion may be indicated via a value of a specific (binary or Boolean) indicator comprised in the subscriber information. This indicator may, along with the phone number of mobile subscriber, be created when the subscriber information entry for the mobile subscriber is added to the database. The international call restriction service may allow the mobile subscriber to activate/deactivate the call blocking (that is, to change the value of the indicator) without unsubscribing to the service itself. Alternatively, if the subscriber information of the mobile subscriber comprises no pre-defined exception criteria, this may be interpreted as an implicit indication that all incoming international calls should be blocked (i.e., that there are no exceptions to the international call blocking). In other cases, more complex exception criteria based on the use of whitelists and/or blacklists may be defined, as will be described below.

In some embodiments, the one or more pre-defined exception criteria of block 206 comprise, for at least one mobile subscriber (or, in some embodiments, each mobile subscriber) of the plurality of mobile subscribers: a criterion defining that an incoming international call is allowed (i.e., not blocked) if an MSISDN of a calling party of the incoming international call is included in a pre-defined mobile-subscriber-specific whitelist of MSISDNs maintained in the database (or in some other internal or external database). Here, the MSISDNs of the whitelist may be MSISDNs having a country code not corresponding to the country of the mobile subscriber (i.e., not matching the country code of the MSISDN of the mobile subscriber). In other words, the mobile subscriber may have defined certain international MSISDNs from which they wish to receive calls. International calls from other MSISDNs may be blocked (at least if no other pre-defined exception criteria are defined).

In some embodiments, the one or more pre-defined exception criteria of block 206 comprise, for at least one mobile subscriber (or, in some embodiments, each mobile subscriber) of the plurality of mobile subscribers: a criterion defining that an incoming international call is allowed (i.e., not blocked) if a country code of an MSISDN of a calling party of the incoming international call is included in a pre-defined mobile-subscriber-specific whitelist of country codes maintained in the database (or in some other internal or external database). Here, the country codes of the whitelist may be country codes not corresponding to the country of the mobile subscriber (i.e., not matching the country code of the MSISDN of the mobile subscriber). In other words, the mobile subscriber may have defined certain countries from which they wish to receive (international) calls. International calls from other countries may be blocked (at least if no other pre-defined exception criteria are defined).

In some embodiments, the pre-defined mobile-subscriber-specific whitelist of country codes described in the previous paragraph may comprise also one or more entries specifying an area code, in addition to the country code. It should be noted that area codes are in use only in a few countries (e.g., in the United States and Canada). In such embodiments, the incoming international call is allowed only if both the country and area codes of the MSISDN of the calling party match the country and area codes defined in the pre-defined mobile-subscriber-specific whitelist (applicable only in cases where area codes are in use in the country of the calling party). In some cases, pre-defined wildcard character(s) (e.g., '*', '%' or a null character) may be used, in the pre-defined mobile-subscriber-specific whitelist of country codes, to indicate that the exception relating to a country code for a country where area codes are in use applies to all area codes.

In some embodiments, the one or more pre-defined exception criteria of block 206 comprise, for at least one mobile subscriber (or, in some embodiments, each mobile subscriber) of the plurality of mobile subscribers: a criterion defining that an incoming international call is allowed (i.e., not blocked) unless a country code of an MSISDN of a calling party of the incoming international call is included in a pre-defined mobile-subscriber-specific blacklist of country codes maintained in the database (or in some other internal or external database). Here, the MSISDNs of the blacklist may be MSISDNs having a country code not corresponding to the country of the mobile subscriber (i.e., not matching the country code of the MSISDN of the mobile subscriber). In other words, the mobile subscriber may have defined certain international MSISDNs from which they do not wish to receive calls. International calls from other MSISDNs may be allowed (at least if no other pre-defined exception criteria are defined).

In some embodiments, the pre-defined mobile-subscriber-specific blacklist of country codes described in the previous paragraph may comprise also one or more entries specifying an area code, in addition to the country code. It should be noted that area codes are in use only in a few countries (e.g., in the United States and Canada). In such embodiments, the incoming international call may be allowed unless both the country and area codes of the MSISDN of the calling party match the country and area codes defined in the pre-defined mobile-subscriber-specific blacklist (applicable only in cases where area codes are in use in the country of the calling party). In some cases, pre-defined wildcard character(s) (e.g., '*', '%' or a null character) may be used, in the pre-defined mobile-subscriber-specific blacklist of country codes, to indicate that the exception relating to a country code for a country where area codes are in use applies to all area codes

In some embodiments, the one or more pre-defined exception criteria of block 206 comprise, for at least one mobile subscriber (or, in some embodiments, each mobile subscriber) of the plurality of mobile subscribers: a criterion defining that an incoming international call is allowed (i.e., not blocked) unless an MSISDN of a calling party of the incoming international call is included in a pre-defined mobile-subscriber-specific blacklist of MSISDNs maintained in the database (or in some other internal or external database). Here, the country codes of the blacklist may be country codes not corresponding to the country of the mobile subscriber (i.e., not matching the country code of the MSISDN of the mobile subscriber). In other words, the mobile subscriber may have defined certain countries from which they do not wish to receive (international) calls. International calls from other countries may be allowed (at least if no other pre-defined exception criteria are defined).

In some embodiments, the one or more pre-defined exception criteria of block 206 comprise, for at least one mobile subscriber (or, in some embodiments, each mobile subscriber) of the plurality of mobile subscribers: a criterion defining that an incoming international call is allowed unless a country code of an MSISDN of a calling party of the incoming international call is included in a pre-defined mobile-subscriber-specific blacklist of country codes maintained in the database (or in some other internal or external database) and/or an MSISDN of a calling party of the incoming international call is included in a pre-defined mobile-subscriber-specific blacklist of MSISDNs maintained in the database (or in some other internal or external database).

In some embodiments, at least one of the whitelists described above as well as at least one of the blacklists described above may be defined in the database simultaneously for at least one mobile subscriber. In such a case, the at least one whitelist may have priority over the at least one blacklist. In other words, international calls corresponding to whitelisted MSISDNs or country codes may be allowed even if said whitelisted MSISDNs or country codes should be blocked according to the at least one blacklist. Alternatively, the at least one blacklist may have priority over the at least one whitelist in such a conflict between the at least one whitelist and the at least one blacklist.

In addition to any of the exception criteria based on whitelists and/or blacklists, the pre-defined exception criteria may comprise, for at least one mobile subscriber (or, in some embodiments, for each mobile subscriber) of the plurality of mobile subscribers: a criterion defining that an incoming international call is allowed only if a current time is outside of a pre-defined forbidden time range maintained in the database (or in some other external or internal database) and/or if a current date is outside of a pre-defined forbidden date range maintained in the database (or in some other external or internal database). In other words, the mobile subscriber may have defined certain forbidden time and/or date range(s) during which reception of (international) calls is not allowed, irrespective of other pre-defined exception criteria (e.g., a whitelist or a blacklist for MSISDN or country code). Outside of the forbidden time and/or date range(s), the incoming international calls may be allowed as long as they satisfy other pre-defined exception criteria.

As an alternative to the embodiment described in the previous paragraph, the pre-defined exception criteria may comprise, for at least one mobile subscriber (or, in some embodiments, for each mobile subscriber) of the plurality of mobile subscribers: a criterion defining that an incoming international call is allowed only if a current time is within a pre-defined allowed time range maintained in the database (or in some other external or internal database) and/or if a current date is within of a pre-defined allowed date range maintained in the database (or in some other external or internal database). In other words, the mobile subscriber may have defined certain allowed time and/or date range(s) during which reception of (international) calls is possible as long as said international calls satisfy other pre-defined exception criteria (e.g., a whitelist or a blacklist for MSISDN or country code).

In response to the phone number of the calling party failing to satisfy the one or more pre-defined exception criteria of the mobile subscriber (e.g., it or its country code is in a blacklist and/or is not in a white list) in block 207, the apparatus blocks (or causes blocking of), in block 208, the incoming international call. In other words, the call setup is not carried out for the incoming international call and the incoming international call is not connected.

In response to the phone number of the calling party satisfying the one or more pre-defined exception criteria of the mobile subscriber in block 207, the apparatus carries out or triggers, in block 209, a call setup for the incoming international call according to the call setup request. Thus, also in this case, the call setup may be executed in a conventional manner.

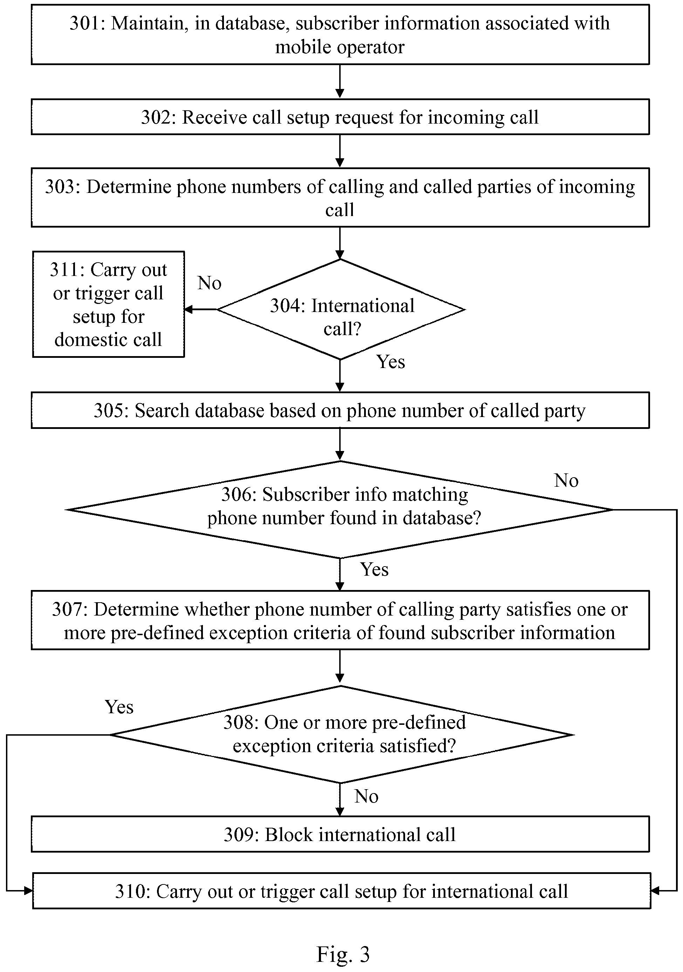

Figure 3 illustrates a process according to embodiments for implementing an international call restricting service. The process of Figure 3 may be implemented using a computing device or a set of interconnected computing devices located in an operator network of a mobile operator. In other words, the process of Figure 3 may be implemented using one or more nodes of the operator network of the mobile operator. The process of Figure 3 may be carried out, for example, by a laptop or desktop computer, a server computer or a cloud computing system or platform. The apparatus may correspond to the restriction service logic 103 of Figure 1 or a combination of the operator call processing entity 102 and the restriction service logic 103 of Figure 1. In the following, the entity carrying out the process is called simply an apparatus.

Figure 3 corresponds to a somewhat more detailed implementation of the process of Figure 2. Any of the features and definitions provided in connection with Figure 2 apply, *mutatis mutandis*, for the process of Figure 3. Namely, blocks 301, 305 to 310 may correspond fully to blocks 201, 204 to 209 of Figure 2.

Similar to as described in connection with Figure 2, the apparatus maintains, in block 301, in a database, subscriber information associated with a mobile operator. Here, the subscriber information comprises, for each of a plurality of mobile subscribers, at least a phone number of a mobile subscriber and one or more pre-defined exception criteria for allowing incoming international calls.

The apparatus receives, in block 302, a call setup request for an incoming call. Here, it is assumed that the incoming call may be either an international call or a domestic call.

The apparatus determines, in block 303, phone numbers of a calling party and a called party of the incoming call, similar to as discussed above in connection with block 203 of Figure 2.

Then, the apparatus determines, in block 304, whether the call setup request relates to an incoming international call. The determination may be based on the call setup request (i.e., contents thereof), associated call signaling, phone numbers of the called and/or calling party and/or on an interface (or a POI) via which the call setup request was received. For example, the determination in block 304 may be based on determining that the call setup request is received (directly) via an international POI. Alternatively, if the call setup request is received via a domestic POI from a mobile network of another domestic (or local) mobile operator (which may have received it via an international POI), the determination in block 304 may be based on information affixed to the phone number of the called party by the first (i.e., initial) operator network of any domestic mobile operator to receive the call setup request (e.g., the operator network 108 of Figure 1). Said information may be, for example, (routing-related) information indicating explicitly or implicitly that said first (domestic) operator network received the call setup request from abroad (i.e., via an international POI). For example, the information may be a number portability prefix. Namely, at least in some countries such as in Finland, the number portability prefix comprises a service identifier which may be used for determining whether the incoming call is an international call (that is, whether said first operator network received the call setup request from abroad).

In some alternative embodiments, the determining in block 304 may be based on a country code of the phone number of the calling party (provided in the MSISDN format). Namely, the apparatus may compare said country code of the phone number of the calling party to a domestic country code, that is, to a country code of the phone number of the called party or equally a country code of the country associated with the apparatus.

In response to the incoming call being determined not to be an international call (i.e., it is determined to be a domestic call) in block 303, the apparatus carries out or triggers, in block 311, a call setup for the (domestic) call according to the call request. In this case, no call restriction service may be applied. Alternatively, a separate conventional domestic call restriction or blocking service may be applied locally at the terminal device of the mobile subscriber. Said separate conventional domestic call restriction or blocking service may be, e.g., based on the phone number of the calling party received during conventional incoming call signaling.

In response to the phone number of the calling party being determined to be an international call in block 304, the apparatus performs actions pertaining to blocks 305 to 310 which correspond to blocks 204 to 209 of Figure 2 discussed above and are thus discussed here again for brevity.

In some alternative embodiments, the determination of the phone numbers of the calling and called parties of the incoming call in block 303 may be carried out after execution of block 304 and before execution of block 305 (and optionally also before or as a part of block 311).

The blocks, related functions, and information exchanges described above by means of Figures 2 and 3 are in no absolute chronological order, and some of them may be performed simultaneously or in an order differing from the given one. Other functions can also be executed between them or within them, and other information may be sent, and/or other rules applied. Some of the blocks or part of the blocks or one or more pieces of information can also be left out or replaced by a corresponding block or part of the block or one or more pieces of information.

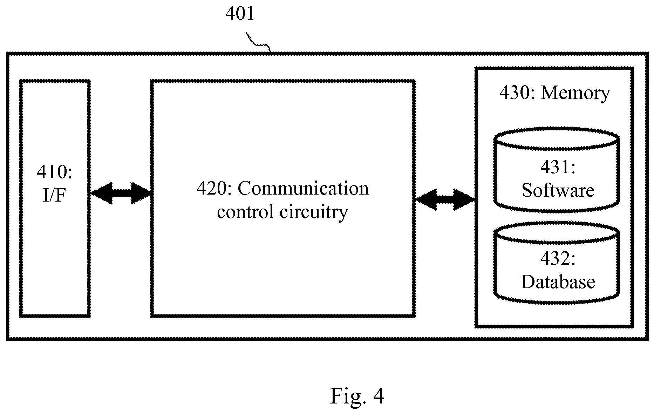

Figure 4 provides an apparatus 401 according to some embodiments. Specifically, Figure 4 may illustrate a computing device 401 configured to carry out at least some of the functions described above. The computing device 401 may be, for example, a server or a desktop computing device. The apparatus 401 may correspond to the restriction service logic 103 of Figure, a combination of the operator call processing entity 102 and the restriction service logic 103 of Figure 1 or a combination of the operator call processing entity 102, the restriction service logic 103 and the database 104 of Figure 1.

The apparatus 401 may comprise one or more communication control circuitry 420, such as at least one processor, and at least one memory 440, including one or more algorithms 431, such as a computer program code (software) wherein the at least one memory and the computer program code (software) are configured, with the at least one processor, to cause the apparatus 401 to carry out any one of the exemplified functionalities of the apparatus (or the restriction service logic or the combination of the operator call processing entity and the restriction service logic) described above. Said at least one memory 440 may also comprise at least one database 432.

When the one or more control circuitry 420 comprises more than one processor, the apparatus 401 may be a distributed device wherein processing of tasks takes place in more than one physical unit. Each of the at least one processor may comprise one or more processor cores. A processing core may comprise, for example, a Cortex-A8 processing core manufactured by ARM Holdings or a Zen processing core designed by Advanced Micro Devices Corporation. The one or more control circuitry 420 310 may comprise at least one Qualcomm Snapdragon and/or Intel Atom processor. The one or more control circuitry 420 may comprise at least one application-specific integrated circuit (ASIC). The one or more control circuitry 420 may comprise at least one field-programmable gate array (FPGA).

Referring to Figure 4, the one or more control circuitry 420 of the apparatus 401 is configured to carry out functionalities described above by means of any of elements any of elements of Figures 2 and 3 using one or more individual circuitries. It is also feasible to use specific integrated circuits, such as ASIC (Application Specific Integrated Circuit) or other components and devices for implementing the functionalities in accordance with different embodiments.

Referring to Figure 4, the apparatus 401 may further comprise different interfaces 410 such as one or more communication interfaces comprising hardware and/or software for realizing communication connectivity according to one or more communication protocols. Specifically, the one or more communication interfaces 410 may comprise, for example, interfaces providing connection to one or more domestic operator networks, one or more international operator network and/or one or more terminal devices (i.e., user devices). As mentioned above, in some embodiments the operator call processing entity and the restriction service logic are implemented using two separate devices. In such embodiments, the apparatus 401 may correspond to an apparatus implementing the restriction service logic and the one or more communication interfaces 410 may comprise, for example, at least one interface providing a connection to an apparatus corresponding to the operator call processing entity.

In some embodiments, the one or more communication interfaces 410 may comprise at least one interface providing a connection to a database maintaining (international call restriction service) subscriber information. Alternatively, said database maintaining (international call restriction service) subscriber information may be the database 432 (i.e., it may be an internal database of the apparatus 401).

Referring to Figure 4, the memory 440 may be implemented using any suitable data storage technology, such as semiconductor based memory devices, flash memory, magnetic memory devices and systems, optical memory devices and systems, fixed memory and removable memory.

According to an embodiment, there is provided an apparatus comprising:
at least one processor; and
at least one memory storing instructions that, when executed by the at least one processor, cause the apparatus at least to perform:
   maintaining, in a database, subscriber information associated with a mobile operator, wherein the subscriber information comprises, for each of a plurality of mobile subscribers of the mobile operator, at least a phone number of a mobile subscriber and one or more pre-defined exception criteria for allowing incoming international calls;
   receiving a call setup request for an incoming international call;
   determining phone numbers of a calling party and a called party of the incoming international call;
   searching the database based on the phone number of the called party;
   in response to finding, from the database, subscriber information of a mobile subscriber corresponding to the called party, determining whether the phone number of the calling party satisfies the one or more pre-defined exception criteria of the found subscriber information; and
in response to the phone number of the calling party failing to satisfy the one or more pre-defined exception criteria of the mobile subscriber, blocking the incoming international call.

As used in this application, the term 'circuitry' may refer to one or more or all of the following: (a) hardware-only circuit implementations, such as implementations in only analog and/or digital circuitry, and (b) combinations of hardware circuits and software (and/or firmware), such as (as applicable): (i) a combination of analog and/or digital hardware circuit(s) with soft-ware/firmware and (ii) any portions of hardware processor(s) with software, including digital signal processor(s), software, and memory(ies) that work together to cause an apparatus, such as a terminal device or an access node, to perform various functions, and (c) hardware circuit(s) and processor(s), such as a microprocessor(s) or a portion of a microprocessor(s), that requires software (e.g. firmware) for operation, but the software may not be present when it is not needed for operation. This definition of 'circuitry' applies to all uses of this term in this application, including any claims. As a further example, as used in this application, the term 'circuitry' also covers an implementation of merely a hardware circuit or processor (or multiple processors) or a portion of a hardware circuit or processor and its (or their) accompanying software and/or firmware.

In an embodiment, at least some of the processes described in connection with Figures 2 and 3 may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, filter (low-pass, high-pass, bandpass and/or bandstop), sensor, circuitry, inverter, capacitor, inductor, resistor, operational amplifier, diode and transistor. In an embodiment, the at least one processor, the memory, and the computer program code form processing means or comprises one or more computer program code portions for carrying out one or more operations according to any one of the embodiments of Figures 2 and 3 or operations thereof. In some embodiments, at least some of the processes may be implemented using discrete components.

Embodiments as described may also be carried out, fully or at least in part, in the form of a computer process defined by a computer program or portions thereof. Embodiments of the methods described in connection with Figures 2 and 3 may be carried out by executing at least one portion of a computer program comprising corresponding instructions. The computer program may be provided as a computer readable medium comprising program instructions stored thereon or as a non-transitory computer readable medium comprising program instructions stored thereon. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, tele-communications signal, and software distribution package, for example. The computer program medium may be a non-transitory medium. Coding of software for carrying out the embodiments as shown and described is well within the scope of a person of ordinary skill in the art.

The term "non-transitory", as used herein, is a limitation of the medium itself (that is, tangible, not a signal) as opposed to a limitation on data storage persistency (for example, RAM vs. ROM).

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Even though embodiments have been described above with reference to examples according to the accompanying drawings, it is clear that the embodiments are not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

### INDUSTRIAL APPLICABILITY

At least some embodiments of the present invention find industrial application in mobile communications.

## Claims

1. An apparatus (401) for selective mobile operator call setup, the apparatus comprising means for performing:
maintaining (201, 301), in a database (432), subscriber information associated with a mobile operator, wherein the subscriber information comprises, for each of a plurality of mobile subscribers of the mobile operator who have requested selective blocking of international calls, at least a phone number of a mobile subscriber who has requested the selective blocking of international calls and one or more pre-defined exception criteria for allowing incoming international calls for said mobile subscriber;
receiving (202, 302) a call setup request for an incoming international call;
determining (203, 303) phone numbers of a calling party (132) and a called party of the incoming international call, wherein the calling party is a person or a robocaller, and the called party is a person;
searching (204, 305) the database (432) based on the phone number of the called party;
in response to finding (205, 306), from the database (432), subscriber information of a mobile subscriber corresponding to the called party, determining (206, 307) whether the phone number of the calling party satisfies the one or more pre-defined exception criteria of the found subscriber information; and
in response to the phone number of the calling party failing to satisfy (207, 308) the one or more pre-defined exception criteria of the mobile subscriber, blocking (208, 309) the incoming international call.

2. The apparatus (401) of claim 1, wherein the means are further configured to perform:
in response to the phone number of the calling party satisfying (207, 308) the one or more pre-defined exception criteria of the mobile subscriber, carrying out or triggering (209, 310) a call setup for the incoming international call according to the call setup request.

3. The apparatus (401) of claim 1 or 2, wherein the means are further configured to perform:
in response to failing to find (205, 306), from the database (432), subscriber information of a mobile subscriber corresponding to the called party, carrying out or triggering (209, 310) a call setup for the incoming international call according to the call setup request.

4. The apparatus (401) according to any preceding claim, wherein, for each of the plurality of mobile subscribers, the phone number of the mobile subscriber is a mobile station international subscriber directory number, MSISDN, of the mobile subscriber; or
for each of the plurality of mobile subscribers, the phone number of the mobile subscriber is a phone number of the mobile subscriber in a national format of a country of the mobile operator.

5. The apparatus (401) according to any preceding claim, wherein the phone numbers of the calling party and the called party are MSISDNs of the calling party and the called party.

6. The apparatus (401) according to any preceding claim, wherein the means are configured to determine the phone numbers of the calling party and the called party based on call signaling associated with the call setup request.

7. The apparatus (401) according to any preceding claim, wherein
the means are configured to receive (202) the call setup request from a mobile network of an initial mobile operator via a domestic point of interconnection, POI, the initial mobile operator being a local mobile operator first to receive the call setup request via an international POI, the mobile operator and the initial mobile operator being mobile operators of the same country; or
the means are configured to receive (202) the call setup request via an international POI.

8. The apparatus (401) according to any preceding claim, wherein the means are further configured to perform:
in response to the receiving (302) of the call setup request, determining (304) that the call setup request relates to an international call.

9. The apparatus (401) according to any preceding claim, wherein the one or more pre-defined exception criteria comprise, for at least one mobile subscriber of the plurality of mobile subscribers:
a criterion defining that an incoming international call is allowed if an MSISDN of a calling party of the incoming international call is included in a pre-defined mobile-subscriber-specific whitelist of MSISDNs maintained in the database (432).

10. The apparatus (401) according to any preceding claim, wherein the one or more pre-defined exception criteria comprise, for at least one mobile subscriber of the plurality of mobile subscribers:
a criterion defining that an incoming international call is allowed if a country code of an MSISDN of a calling party of the incoming international call is included in a pre-defined mobile-subscriber-specific whitelist of country codes maintained in the database (432).

11. The apparatus (401) according to any preceding claim, wherein the one or more pre-defined exception criteria comprise, for at least one mobile subscriber of the plurality of mobile subscribers:
a criterion defining that an incoming international call is allowed unless a country code of an MSISDN of a calling party of the incoming international call is included in a pre-defined mobile-subscriber-specific blacklist of country codes maintained in the database (432); or
a criterion defining that an incoming international call is allowed unless an MSISDN of a calling party of the incoming international call is included in a pre-defined mobile-subscriber-specific blacklist of MSISDNs maintained in the database (432); or
a criterion defining that an incoming international call is allowed unless a country code of an MSISDN of a calling party of the incoming international call is included in a pre-defined mobile-subscriber-specific blacklist of country codes maintained in the database (432) and/or an MSISDN of a calling party of the incoming international call is included in a pre-defined mobile-subscriber-specific blacklist of MSISDNs maintained in the database (432).

12. The apparatus (401) according to any of claims 9 to 11, wherein the one or more pre-defined exception criteria comprise, for at least one mobile subscriber of the plurality of mobile subscribers:
a criterion defining that an incoming international call is allowed only if a current time is outside of a pre-defined time range maintained in the database (432) and/or if a current date is outside of a pre-defined date range maintained in the database (432).

13. The apparatus (401) according to any preceding claim, wherein the one or more pre-defined exception criteria comprise, for at least one mobile subscriber of the plurality of mobile subscribers:
a criterion indicating that no incoming international calls should be allowed.

14. A method comprising:
maintaining (201, 301), in a database (432), subscriber information associated with a mobile operator, wherein the subscriber information comprises, for each of a plurality of mobile subscribers of the mobile operator who have requested selective blocking of international calls, at least a phone number of a mobile subscriber who has requested the selective blocking of international calls and one or more pre-defined exception criteria for allowing incoming international calls for said mobile subscriber;
receiving (202, 302) a call setup request for an incoming international call;
determining (203, 303) phone numbers of a calling party and a called party of the incoming international call, wherein the calling party is a person or a robocaller, and the called party is a person;
searching (204, 305) the database (432) based on the phone number of the called party;
in response to finding (205, 306), from the database (432), subscriber information of a mobile subscriber corresponding to the called party, determining (206, 307) whether the phone number of the calling party satisfies the one or more pre-defined exception criteria of the found subscriber information; and
in response to the phone number of the calling party failing to satisfy (207, 308) the one or more pre-defined exception criteria of the mobile subscriber, blocking (208, 309) the incoming international call.

15. A computer program comprising instructions for performing the following:
receiving (202, 302) a call setup request for an incoming international call;
determining (203, 303) phone numbers of a calling party and a called party of the incoming international call, wherein the calling party is a person or a robocaller, and the called party is a person;
searching (204, 305) a database (432) based on the phone number of the called party, wherein the database (432) comprises subscriber information associated with a mobile operator, the subscriber information comprising, for each of a plurality of mobile subscribers of the mobile operator who have requested selective blocking of international calls, at least a phone number of a mobile subscriber who has requested the selective blocking of international calls and one or more pre-defined exception criteria for allowing incoming international calls for said mobile subscriber;
in response to finding (205, 306), from the database (432), subscriber information of a mobile subscriber corresponding to the called party, determining (206, 307) whether the phone number of the calling party satisfies the one or more pre-defined exception criteria of the found subscriber information; and
in response to the phone number of the calling party failing to satisfy (207, 308) the one or more pre-defined exception criteria of the mobile subscriber, blocking (208, 309) the incoming international call.

## Patentansprüche

1. Einrichtung (401) zum selektiven Verbindungsaufbau mit Mobilfunkbetreibern, Einrichtung Mittel zur Durchführung folgender Schritte umfasst:
Warten (201, 301) von Teilnehmerinformationen, welche mit einem Mobilfunkbetreiber verknüpft sind, in einer Datenbank (432), wobei die Teilnehmerinformationen für jeden einer Vielzahl von Mobilfunkteilnehmern des Mobilfunkbetreibers, welcher selektive Sperrung von internationalen Anrufen angefordert haben, zumindest eine Telefonnummer eines Mobilfunkteilnehmers, welcher die selektive Sperrung von internationalen Anrufen angefordert hat, und ein oder mehrere vordefinierte Ausnahmekriterien zum Erlauben eingehender internationaler Anrufe für den Mobilfunkteilnehmer umfassen;
Empfangen (202, 302) einer Verbindungsaufbauanforderung für einen eingehenden internationalen Anruf;
Bestimmen (203, 303) von Telefonnummern eines anrufenden Teilnehmers (132) und eines angerufenen Teilnehmers des eingehenden internationalen Anrufs, wobei der anrufende Teilnehmer eine Person oder ein Robocaller ist und der angerufene Teilnehmer eine Person ist;
Durchsuchen (204, 305) der Datenbank (432) basierend auf der Telefonnummer des angerufenen Teilnehmers;
als Reaktion auf Auffinden (205, 306) von Teilnehmerinformationen eines Mobilfunkteilnehmers in der Datenbank (432), welche dem angerufenen Teilnehmer entsprechen, Bestimmen (206, 307), ob die Telefonnummer des anrufenden Teilnehmers eines oder mehrere der vordefinierten Ausnahmekriterien der gefundenen Teilnehmerinformationen erfüllt; und
als Reaktion darauf, dass die Telefonnummer des anrufenden Teilnehmers das eine oder die mehreren vordefinierten Ausnahmekriterien des Mobilfunkteilnehmers nicht erfüllt (207, 308), Sperren (208, 309) des eingehenden internationalen Anrufs.

2. Einrichtung (401) nach Anspruch 1, wobei die Mittel weiter dazu konfiguriert sind, Folgendes auszuführen:
als Reaktion darauf, dass die Telefonnummer des anrufenden Teilnehmers das eine oder die mehreren vordefinierten Ausnahmekriterien des Mobilfunkteilnehmers erfüllt (207, 308), Ausführen oder Auslösen (209, 310) eines Verbindungsaufbaus für den eingehenden internationalen Anruf gemäß der Verbindungsaufbauanforderung.

3. Einrichtung (401) nach Anspruch 1 oder 2, wobei die Mittel weiter dazu konfiguriert sind, Folgendes auszuführen:
als Reaktion darauf, dass Teilnehmerinformationen eines Mobilfunkteilnehmers, welche dem angerufenen Teilnehmer entsprechen, nicht in der Datenbank (432) gefunden wurden (205, 306), Ausführen oder Auslösen (209, 310) eines Verbindungsaufbaus für den eingehenden internationalen Anruf gemäß der Verbindungsaufbauanforderung.

4. Einrichtung (401) nach einem vorstehenden Anspruch, wobei für jeden der Vielzahl von Mobilfunkteilnehmern die Telefonnummer des Mobilfunkteilnehmers eine Mobile Station International Subscriber Directory Number, MSISDN, des Mobilfunkteilnehmers ist; oder
für jeden der Vielzahl von Mobilfunkteilnehmern die Telefonnummer des Mobilfunkteilnehmers eine Telefonnummer des Mobilfunkteilnehmers in einem nationalen Format eines Landes des Mobilfunkbetreibers ist.

5. Einrichtung (401) nach einem vorstehenden Anspruch, wobei die Telefonnummern des anrufenden Teilnehmers und des angerufenen Teilnehmers MSISDNs des anrufenden Teilnehmers und des angerufenen Teilnehmers sind.

6. Einrichtung (401) nach einem vorstehenden Anspruch, wobei die Mittel dazu konfiguriert sind, die Telefonnummern des anrufenden Teilnehmers und des angerufenen Teilnehmers basierend auf der mit der Verbindungsaufbauanforderung verknüpften Anrufsignalisierung zu bestimmen.

7. Einrichtung (401) nach einem vorstehenden Anspruch, wobei
die Mittel dazu konfiguriert sind, die Verbindungsaufbauanforderung von einem Mobilfunknetz eines ursprünglichen Mobilfunkbetreibers über einen inländischen Zusammenschaltungspunkt, POI, zu empfangen (202), wobei der ursprüngliche Mobilfunkbetreiber ein lokaler Mobilfunkbetreiber ist, der als erster die Verbindungsaufbauanforderung über einen internationalen POI empfängt, wobei der Mobilfunkbetreiber und der ursprüngliche Mobilfunkbetreiber Mobilfunkbetreiber desselben Landes sind; oder
die Mittel dazu konfiguriert sind, die Verbindungsaufbauanforderung (202) über einen internationalen POI zu empfangen.

8. Einrichtung (401) nach einem vorstehenden Anspruch, wobei die Mittel weiter dazu konfiguriert sind, Folgendes auszuführen:
als Reaktion auf Empfangen (302) der Verbindungsaufbauanforderung, Bestimmen (304), dass sich die Verbindungsaufbauanforderung auf einen internationalen Anruf bezieht.

9. Einrichtung (401) nach einem vorstehenden Anspruch, wobei das eine oder die mehreren vordefinierten Ausnahmekriterien für zumindest einen Mobilfunkteilnehmer aus der Vielzahl von Mobilfunkteilnehmern Folgendes umfassen:
ein Kriterium, welches definiert, dass ein eingehender internationaler Anruf erlaubt wird, wenn eine MSISDN eines anrufenden Teilnehmers des eingehenden internationalen Anrufs in einer vordefinierten, mobilfunkteilnehmerspezifischen Whitelist von MSISDNs beinhaltet ist, welche in der Datenbank (432) gewartet wird.

10. Einrichtung (401) nach einem vorstehenden Anspruch, wobei das eine oder die mehreren vordefinierten Ausnahmekriterien für zumindest einen Mobilfunkteilnehmer aus der Vielzahl von Mobilfunkteilnehmern Folgendes umfassen:
ein Kriterium, welches definiert, dass ein eingehender internationaler Anruf erlaubt wird, wenn eine Ländervorwahl einer MSISDN eines anrufenden Teilnehmers des eingehenden internationalen Anrufs in einer vordefinierten, mobilfunkteilnehmerspezifischen Whitelist von Ländervorwahlen beinhaltet ist, welche in der Datenbank (432) gewartet wird.

11. Einrichtung (401) nach einem vorstehenden Anspruch, wobei das eine oder die mehreren vordefinierten Ausnahmekriterien für zumindest einen Mobilfunkteilnehmer aus der Vielzahl von Mobilfunkteilnehmern Folgendes umfassen:
ein Kriterium, welches definiert, dass ein eingehender internationaler Anruf erlaubt wird, sofern eine Ländervorwahl einer MSISDN eines anrufenden Teilnehmers des eingehenden internationalen Anrufs nicht in einer vordefinierten, mobilfunkteilnehmerspezifischen Blacklist von Ländervorwahlen beinhaltet ist, welche in der Datenbank (432) gewartet wird; oder
ein Kriterium, welches definiert, dass ein eingehender internationaler Anruf erlaubt wird, sofern eine MSISDN eines anrufenden Teilnehmers des eingehenden internationalen Anrufs nicht in einer vordefinierten, mobilfunkteilnehmerspezifischen Blacklist von MSISDNs beinhaltet ist, welche in der Datenbank (432) gewartet wird; oder
ein Kriterium, welches definiert, dass ein eingehender internationaler Anruf erlaubt wird, sofern eine Ländervorwahl einer MSISDN eines anrufenden Teilnehmers des eingehenden internationalen Anrufs nicht in einer vordefinierten, mobilfunkteilnehmerspezifischen Blacklist von Ländervorwahlen beinhaltet ist, welche in der Datenbank (432) gewartet wird, und/oder eine MSISDN eines anrufenden Teilnehmers des eingehenden internationalen Anrufs nicht in einer vordefinierten, mobilfunkteilnehmerspezifischen Blacklist von MSISDNs beinhaltet ist, welche in der Datenbank (432) gewartet wird.

12. Einrichtung (401) nach einem der Ansprüche 9 bis 11, wobei das eine oder die mehreren vordefinierten Ausnahmekriterien für zumindest einen Mobilfunkteilnehmer aus der Vielzahl von Mobilfunkteilnehmern Folgendes umfassen:
ein Kriterium, welches definiert, dass ein eingehender internationaler Anruf nur erlaubt wird, wenn eine aktuelle Uhrzeit außerhalb eines in der Datenbank (432) gespeicherten, vordefinierten Zeitbereichs liegt, und/oder wenn ein aktuelles Datum außerhalb eines vordefinierten Datumsbereichs liegt, welcher in der Datenbank (432) gewartet wird.

13. Einrichtung (401) nach einem vorstehenden Anspruch, wobei das eine oder die mehreren vordefinierten Ausnahmekriterien für zumindest einen Mobilfunkteilnehmer aus der Vielzahl von Mobilfunkteilnehmern Folgendes umfassen:
ein Kriterium, welches angibt, dass keine eingehenden internationalen Anrufe erlaubt werden sollen.

14. Verfahren, umfassend:
Warten (201, 301) von Teilnehmerinformationen, welche mit einem Mobilfunkbetreiber verknüpft sind, in einer Datenbank (432), wobei die Teilnehmerinformationen für jeden einer Vielzahl von Mobilfunkteilnehmern des Mobilfunkbetreibers, welcher selektive Sperrung von internationalen Anrufen angefordert haben, zumindest eine Telefonnummer eines Mobilfunkteilnehmers, welcher die selektive Sperrung von internationalen Anrufen angefordert hat, und ein oder mehrere vordefinierte Ausnahmekriterien zum Erlauben eingehender internationaler Anrufe für den Mobilfunkteilnehmer umfassen;
Empfangen (202, 302) einer Verbindungsaufbauanforderung für einen eingehenden internationalen Anruf;
Bestimmen (203, 303) von Telefonnummern eines anrufenden Teilnehmers und eines angerufenen Teilnehmers des eingehenden internationalen Anrufs, wobei der anrufende Teilnehmer eine Person oder ein Robocaller ist und der angerufene Teilnehmer eine Person ist;
Durchsuchen (204, 305) der Datenbank (432) basierend auf der Telefonnummer des angerufenen Teilnehmers;
als Reaktion auf Auffinden (205, 306) von Teilnehmerinformationen eines Mobilfunkteilnehmers in der Datenbank (432), welche dem angerufenen Teilnehmer entsprechen, Bestimmen (206, 307), ob die Telefonnummer des anrufenden Teilnehmers eines oder mehrere der vordefinierten Ausnahmekriterien der gefundenen Teilnehmerinformationen erfüllt; und
als Reaktion darauf, dass die Telefonnummer des anrufenden Teilnehmers das eine oder die mehreren vordefinierten Ausnahmekriterien des Mobilfunkteilnehmers nicht erfüllt (207, 308), Sperren (208, 309) des eingehenden internationalen Anrufs.

15. Computerprogramm, umfassend Anweisungen zum Ausführend des Folgenden:
Empfangen (202, 302) einer Verbindungsaufbauanforderung für einen eingehenden internationalen Anruf;
Bestimmen (203, 303) von Telefonnummern eines anrufenden Teilnehmers und eines angerufenen Teilnehmers des eingehenden internationalen Anrufs, wobei der anrufende Teilnehmer eine Person oder ein Robocaller ist und der angerufene Teilnehmer eine Person ist;
Durchsuchen (204, 305) einer Datenbank (432) basierend auf der Telefonnummer des angerufenen Teilnehmers, wobei die Datenbank (432) Teilnehmerinformationen umfasst, welche mit einem Mobilfunkbetreiber verknüpft sind, wobei die Teilnehmerinformationen für jeden einer Vielzahl von Mobilfunkteilnehmern des Mobilfunkbetreibers, welcher selektive Sperrung von internationalen Anrufen angefordert haben, zumindest eine Telefonnummer eines Mobilfunkteilnehmers, welcher die selektive Sperrung von internationalen Anrufen angefordert hat, und ein oder mehrere vordefinierte Ausnahmekriterien zum Erlauben eingehender internationaler Anrufe für den Mobilfunkteilnehmer umfassen;
als Reaktion auf Auffinden (205, 306) von Teilnehmerinformationen eines Mobilfunkteilnehmers in der Datenbank (432), welche dem angerufenen Teilnehmer entsprechen, Bestimmen (206, 307), ob die Telefonnummer des anrufenden Teilnehmers eines oder mehrere der vordefinierten Ausnahmekriterien der gefundenen Teilnehmerinformationen erfüllt; und
als Reaktion darauf, dass die Telefonnummer des anrufenden Teilnehmers das eine oder die mehreren vordefinierten Ausnahmekriterien des Mobilfunkteilnehmers nicht erfüllt (207, 308), Sperren (208, 309) des eingehenden internationalen Anrufs.

## Revendications

1. Appareil (401) pour l'établissement sélectif d'appels d'opérateurs mobiles, l'appareil comprenant des moyens pour effectuer :
la mise à jour (201, 301), dans une base de données (432), d'informations d'abonnés associées à un opérateur mobile, dans lequel les informations d'abonnés comprennent, pour chacun d'une pluralité d'abonnés mobiles de l'opérateur mobile qui ont demandé le blocage sélectif des appels internationaux, au moins un numéro de téléphone d'un abonné mobile qui a demandé le blocage sélectif des appels internationaux et un ou plusieurs critères d'exception prédéfinis pour autoriser les appels internationaux entrants pour ledit abonné mobile ;
la réception (202, 302) d'une demande d'établissement d'appel pour un appel international entrant ;
la détermination (203, 303) de numéros de téléphone d'un appelant (132) et d'un appelé de l'appel international entrant, dans lequel l'appelant est une personne ou un robot d'appel, et l'appelé est une personne ;
la recherche (204, 305) dans la base de données (432) en fonction du numéro de téléphone de l'appelé ;
si des informations d'abonné d'un abonné mobile correspondant à l'appelé sont trouvées (205, 306) dans la base de données (432), la détermination (206, 307) pour établir si le numéro de téléphone de l'appelant satisfait aux un ou plusieurs critères d'exception prédéfinis des informations d'abonné trouvées ; et
si le numéro de téléphone de l'appelant ne satisfait pas (207, 308) aux un ou plusieurs critères d'exception prédéfinis de l'abonné mobile, le blocage (208, 309) de l'appel international entrant.

2. Appareil (401) selon la revendication 1, dans lequel les moyens sont en outre configurés pour effectuer :
si le numéro de téléphone de l'appelant satisfait (207, 308) aux un ou plusieurs critères d'exception prédéfinis de l'abonné mobile, la mise en œuvre ou le déclenchement (209, 310) d'un établissement d'appel pour l'appel international entrant conformément à la demande d'établissement d'appel.

3. Appareil (401) selon la revendication 1 ou 2, dans lequel les moyens sont en outre configurés pour effectuer :
faute de trouver (205, 306), dans la base de données (432), des informations d'abonné d'un abonné mobile correspondant à l'appelé, la mise en œuvre ou le déclenchement (209, 310) d'un établissement d'appel pour l'appel international entrant selon la demande d'établissement d'appel.

4. Appareil (401) selon une quelconque revendication précédente, dans lequel, pour chacun de la pluralité d'abonnés mobiles, le numéro de téléphone de l'abonné mobile est un numéro de réseau numérique à intégration de services de l'abonné mobile, MSISDN, de l'abonné mobile ; ou
pour chacun de la pluralité d'abonnés mobiles, le numéro de téléphone de l'abonné mobile est un numéro de téléphone de l'abonné mobile au format national du pays de l'opérateur mobile.

5. Appareil (401) selon une quelconque revendication précédente, dans lequel les numéros de téléphone de l'appelant et de l'appelé sont des MSISDN de l'appelant et de l'appelé.

6. Appareil (401) selon une quelconque revendication précédente, dans lequel les moyens sont configurés pour déterminer les numéros de téléphone de l'appelant et de l'appelé sur la base de la signalisation d'appel associée à la demande d'établissement d'appel.

7. Appareil (401) selon une quelconque revendication précédente, dans lequel
les moyens sont configurés pour recevoir (202) la demande d'établissement d'appel d'un réseau mobile d'un opérateur mobile initial via un point d'interconnexion, POI, national, l'opérateur mobile initial étant un opérateur mobile local qui reçoit en premier la demande d'établissement d'appel via un POI international, l'opérateur mobile et l'opérateur mobile initial étant des opérateurs mobiles du même pays ; ou
les moyens sont configurés pour recevoir (202) la demande d'établissement d'appel via un POI international.

8. Appareil (401) selon une quelconque revendication précédente, dans lequel les moyens sont en outre configurés pour effectuer :
dès réception (302) de la demande d'établissement d'appel, la détermination (304) que la demande d'établissement d'appel concerne un appel international.

9. Appareil (401) selon une quelconque revendication précédente, dans lequel les un ou plusieurs critères d'exception prédéfinis comprennent, pour au moins un abonné mobile parmi la pluralité d'abonnés mobiles :
un critère définissant qu'un appel international entrant est autorisé si un MSISDN d'un appelant de l'appel international entrant est inclus dans une liste blanche prédéfinie de MSISDN spécifique à l'abonné mobile mise à jour dans la base de données (432).

10. Appareil (401) selon une quelconque revendication précédente, dans lequel les un ou plusieurs critères d'exception prédéfinis comprennent, pour au moins un abonné mobile parmi la pluralité d'abonnés mobiles :
un critère définissant qu'un appel international entrant est autorisé si un code pays d'un MSISDN d'un appelant de l'appel international entrant est inclus dans une liste blanche prédéfinie de codes pays spécifique à l'abonné mobile mise à jour dans la base de données (432).

11. Appareil (401) selon une quelconque revendication précédente, dans lequel les un ou plusieurs critères d'exception prédéfinis comprennent, pour au moins un abonné mobile de la pluralité d'abonnés mobiles :
un critère définissant qu'un appel international entrant est autorisé à moins que le code pays d'un MSISDN d'un appelant de l'appel international entrant ne figure dans une liste noire prédéfinie de codes pays spécifique à l'abonné mobile et mise à jour dans la base de données (432) ; ou
un critère définissant qu'un appel international entrant est autorisé à moins que le MSISDN d'un appelant de l'appel international entrant ne figure dans une liste noire prédéfinie de MSISDN spécifique à l'abonné mobile et mise à jour dans la base de données (432) ; ou
un critère définissant qu'un appel international entrant est autorisé à moins qu'un code pays d'un MSISDN d'un appelant de l'appel international entrant ne figure dans une liste noire prédéfinie de codes pays spécifique à l'abonné mobile mise à jour dans la base de données (432) et/ou qu'un MSISDN d'un appelant de l'appel international entrant ne figure dans une liste noire prédéfinie de MSISDN spécifique à l'abonné mobile mise à jour dans la base de données (432).

12. Appareil (401) selon l'une quelconque des revendications 9 à 11, dans lequel les un ou plusieurs critères d'exception prédéfinis comprennent, pour au moins un abonné mobile parmi la pluralité d'abonnés mobiles :
un critère définissant qu'un appel international entrant n'est autorisé que si l'heure courante est en dehors d'une plage horaire prédéfinie mise à jour dans la base de données (432) et/ou si une date courante est en dehors d'une plage de dates prédéfinie mise à jour dans la base de données (432).

13. Appareil (401) selon une quelconque revendication précédente, dans lequel les un ou plusieurs critères d'exception prédéfinis comprennent, pour au moins un abonné mobile parmi la pluralité d'abonnés mobiles :
un critère indiquant qu'aucun appel international entrant ne doit être autorisé.

14. Procédé comprenant :
la mise à jour (201, 301), dans une base de données (432), d'informations d'abonnés associées à un opérateur mobile, dans lequel les informations d'abonnés comprennent, pour chacun d'une pluralité d'abonnés mobiles de l'opérateur mobile qui ont demandé le blocage sélectif des appels internationaux, au moins un numéro de téléphone d'un abonné mobile qui a demandé le blocage sélectif des appels internationaux et un ou plusieurs critères d'exception prédéfinis pour autoriser les appels internationaux entrants pour ledit abonné mobile ;
la réception (202, 302) d'une demande d'établissement d'appel pour un appel international entrant ;
la détermination (203, 303) de numéros de téléphone d'un appelant et d'un appelé de l'appel international entrant, dans lequel l'appelant est une personne ou un robot d'appel, et l'appelé est une personne ;
la recherche (204, 305) dans la base de données (432) en fonction du numéro de téléphone de l'appelé ;
si des informations d'abonné d'un abonné mobile correspondant à l'appelé sont trouvées (205, 306) dans la base de données (432), la détermination (206, 307) pour établir si le numéro de téléphone de l'appelant satisfait aux un ou plusieurs critères d'exception prédéfinis des informations d'abonné trouvées ; et
si le numéro de téléphone de l'appelant ne satisfait pas (207, 308) aux un ou plusieurs critères d'exception prédéfinis de l'abonné mobile, le blocage (208, 309) de l'appel international entrant.

15. Programme informatique comprenant des instructions pour effectuer les opérations suivantes :
la réception (202, 302) d'une demande d'établissement d'appel pour un appel international entrant ;
la détermination (203, 303) de numéros de téléphone d'un appelant et d'un appelé de l'appel international entrant, dans lequel l'appelant est une personne ou un robot d'appel, et l'appelé est une personne ;
la recherche (204, 305) dans une base de données (432) en fonction du numéro de téléphone de l'appelé, dans lequel la base de données (432) comprend des informations d'abonné associées à un opérateur mobile, les informations d'abonné comprenant, pour chacun d'une pluralité d'abonnés mobiles de l'opérateur mobile qui ont demandé le blocage sélectif des appels internationaux, au moins un numéro de téléphone d'un abonné mobile qui a demandé le blocage sélectif des appels internationaux et un ou plusieurs critères d'exception prédéfinis pour autoriser les appels internationaux entrants pour ledit abonné mobile ;
si des informations d'abonné d'un abonné mobile correspondant à l'appelé sont trouvées (205, 306) dans la base de données (432), la détermination (206, 307) pour établir si le numéro de téléphone de l'appelant satisfait aux un ou plusieurs critères d'exception prédéfinis des informations d'abonné trouvées ; et
si le numéro de téléphone de l'appelant ne satisfait pas (207, 308) aux un ou plusieurs critères d'exception prédéfinis de l'abonné mobile, le blocage (208, 309) de l'appel international entrant.
